(19) Europäisches Patentamt / European Patent Office / Office européen des brevets

(11) **EP 2 529 187 B1**

(12) **FASCICULE DE BREVET EUROPEEN**

(45) Date de publication et mention
de la délivrance du brevet:
**22.08.2018 Bulletin 2018/34**

(21) Numéro de dépôt: **11704646.6**

(22) Date de dépôt: **17.01.2011**

(51) Int Cl.:
***G01D 5/14*** *(2006.01)*

(86) Numéro de dépôt international:
**PCT/FR2011/000028**

(87) Numéro de publication internationale:
**WO 2011/092396 (04.08.2011 Gazette 2011/31)**

(54) **DISPOSITIF POUR LA MESURE DE POSITIONNEMENT D'UN MICRO-ACTIONNEUR**

VORRICHTUNG ZUR MESSUNG DER POSITIONIERUNG EINES MIKROAKTUATORS

DEVICE FOR MEASURING THE POSITIONING OF A MICROACTUATOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.01.2010 FR 1000307**

(43) Date de publication de la demande:
**05.12.2012 Bulletin 2012/49**

(73) Titulaires:
• **Université de Franche-Comté
25030 Besançon Cedex (FR)**
• **Centre National de la Recherche Scientifique
(C.N.R.S.)
75794 Paris Cedex 16 (FR)**
• **ECOLE NATIONALE SUPERIEURE DE
MECANIQUE ET DES
MICROTECHNIQUES
25030 Besançon (FR)**

(72) Inventeurs:
• **HERIBAN, David
F-25480 Ecole Valentin (FR)**
• **AGNUS, Joël
F-25870 Auxon Dessous (FR)**
• **NOIZET, Ronan
F-25000 Besançon (FR)**

(74) Mandataire: **Plaçais, Jean Yves
Cabinet Netter
36, avenue Hoche
75008 Paris (FR)**

(56) Documents cités:
**EP-A1- 1 365 208        WO-A2-2004/028756
DE-A1- 19 600 616      FR-A1- 2 909 170**

**Description**

La présente invention se rapporte à un dispositif microtechnique pour la mesure de positionnement d'un micro-actionneur.

La détection et la mesure de champs magnétiques est largement utilisée dans le monde industriel. Notamment, il est possible de détecter la présence d'un aimant ou encore de mesurer une position spécifique de cet aimant dans un environnement physique (capteur de vitesse, capteurs de position).

Plus précisément, les aimants émettent un champ magnétique qu'il s'agit d'analyser par voie de capteur environnant. Des capteurs connus à cet effet sont les capteurs à effet Hall.

Un capteur de position utilisant la mesure du champ magnétique d'un aimant permanent par un capteur de champ magnétique voit sa résolution en position se dégrader de manière exponentielle en fonction de la distance en aimant et capteur magnétique. Plus l'aimant est loin, plus la résolution de capteur de position est mauvaise et les bruits magnétiques et électroniques deviennent prépondérants devant la mesure. Cette dégradation est liée à la nature physique des champs magnétiques et aux performances des capteurs magnétiques.

Les applications industrielles du champ magnétique connues opèrent généralement dans un domaine macroscopique ce qui implique un appareillage complexe et coûteux pour augmenter la résolution et filtrer les bruits précités. D'autres applications sont limitées à la détermination de position ou d'orientation d'un objet dans un champ magnétique ; ou encore se contentent de mesures de déplacements ne comprenant qu'un seul degré de liberté.

Le document WO 2008/071875 décrit un capteur pour la mesure de déplacement d'un aimant. Pour permettre des déplacements de plusieurs millimètres, l'aimant est défini dans un repère cartésien ou cylindrique et les capteurs de position sont de nature linéaire ou rotative.

Le document WO 2009/120507 décrit une sonde de positionnement apte à détecter un champ magnétique en relation avec des aimants montés sur une armature. Les déplacements mesurés sont limités à un seul degré de liberté.

Le document WO 01/67034 décrit un procédé pour déterminer la position ou l'orientation d'un objet à l'aide d'un champ magnétique. Pour cela un capteur est fixé sur l'objet dont la position ou l'orientation est à déterminer. Le document EP 1 365 208 décrit un capteur de déplacement comprenant un aimant monté sur un objet en déplacement et un premier élément à effet Hall disposé au voisinage d'un point central de l'aimant et un deuxième élément à effet Hall disposé au voisinage du premier élément à effet Hall du côté opposé à l'aimant. Tout ceci fait que certains domaines technologiques, lesquels requièrent une grande résolution et une grande précision de mesure de position, ne peuvent pas faire appel aux procédés ou dispositif connus dans l'état de la technique en relation avec des capteurs de champ magnétique. Parmi ces domaines, les micro- et nanotechnologies sont particulièrement touchés.

Les micro- et nanotechnologies évoluent rapidement. Ces technologies mettent en oeuvre des fabrications et des procédés à l'échelle submillimétrique, à savoir dans le domaine du micromètre et nanomètre.

Les applications des micro- et nanotechnologies sont vastes et sont notamment utilisés pour le micro-usinage lors de la fabrication de microsystèmes (puces électroniques de type capteur/actionneur) ou microsystèmes/nanosystèmes électromécaniques (MEMS : « *microelectromecanical systems* », MST : « *microsystem technology* » ou NST : « *nanosystem technology* »).

Les systèmes précités trouvent leur application dans des domaines très variés parmi lesquels on peut citer l'industrie automobile, l'aéronautique, la télécommunication, la biotechnologie, la médecine, la physique, l'informatique, l'électronique, l'ingénierie moléculaire ou encore l'ingénierie de nanomatériaux.

D'autres domaines tels que la mécatronique utilisent aujourd'hui des systèmes micro- ou nanotechnologiques. La mécatronique combine l'électronique, la mécanique et l'informatique pour commander des systèmes complexes.

Les appareillages en micro- ou nanotechnologies utilisent classiquement des matériaux de type piézoélectrique, silicium ou analogue. Les phénomènes physiques mis en oeuvre se basent essentiellement sur les propriétés thermiques, magnétiques, piézoélectriques, électrostatiques ou analogues des matériaux utilisés. C'est la nature même du matériau et de ses propriétés physiques qui permet de réaliser des systèmes compacts générant des mouvements de haute résolution (1 nm à 1 $\mu$m).

Comme indiqué, ces technologies opèrent à l'échelle du micro- ou nanomètre et relèvent d'une grande précision. Mais les phénomènes physiques mis en oeuvre sont généralement non-linéaire et perturbés par l'environnement (en particulier les phénomènes thermiques ou piézoélectriques). Par conséquent les micro- et nanotechnologies ont recours soit à des appareillages externes, coûteux et sophistiqués de type appareillages de mesure au laser ou interféromètres pour palier les imprécisions citées plus haut, soit des appareillages internes au micro- ou nano-système, eux-aussi soumis à des phénomènes physiques perturbateurs.

À cela s'ajoute que les appareillages de correction d'erreurs utilisés sont généralement encombrants et vont à l'encontre de la miniaturisation recherchée en micro- ou nanotechnologie.

L'invention vient améliorer la situation.

La Demanderesse a observé que le passage à une échelle microscopique modifie considérablement l'intérêt applicatif des mesures de champ magnétique dès lors qu'un positionnement spécifique des capteurs magnétiques est respecté.

Le dispositif microtechnique proposé est du type comprenant un actionneur, agencé pour déplacer un équipage mobile par rapport à un support, cet équipage mobile comportant un aimant permanent, et un premier capteur magnétique, agencé pour détecter un déplacement de l'aimant. Il est remarquable en ce que l'actionneur est agencé pour déplacer l'équipage mobile selon deux degrés de liberté à partir d'une position de repos, et que l'on va également chercher à faire une mesure à deux dimensions. L'aimant permanent est de préférence choisi avec une distribution de champ magnétique qui admet un plan de symétrie principal, ainsi qu'une direction principale d'aimantation qui passe un centre, Le premier capteur est placé sensiblement dans ledit plan de symétrie principal, à une première distance de travail de l'aimant, tandis que l'axe de travail de ce premier capteur est sensiblement perpendiculaire à la direction principale d'aimantation, et passe sensiblement par le centre, dans la position de repos de l'aimant, Il est prévu un second capteur magnétique, placé sensiblement dans le plan de symétrie principal du champ de l'aimant, à une seconde distance de travail de l'aimant, tandis que l'axe de travail de ce second capteur est sensiblement parallèle à la direction principale d'aimantation, dans la position de repos de l'aimant. Enfin, le second capteur est positionné au voisinage d'un point d'extremum, pour ladite seconde distance de travail, ledit point d'extremum étant situé à un emplacement pour lequel la composante sur l'axe de travail du gradient de la composante sur la direction principale d'aimantation est maximale, Les premier et second capteurs sont alors sensibles aux déplacements de l'équipage mobile perpendiculairement à leurs axes de travail respectifs.

D'autres caractéristiques sont intéressantes, séparément ou en combinaison :

- le premier capteur est positionné sur la surface d'une sphère centrée sensiblement sur ledit centre et dont le rayon est compris entre 500 $\mu$m et 2000 $\mu$m, préférentiellement compris entre 1000 $\mu$m et 1200 $\mu$m et est encore plus préférentiellement sensiblement égal à 1100 $\mu$m ;

- le second capteur est positionné sur la surface d'une sphère centrée sensiblement sur ledit centre et dont le rayon est compris entre 500 $\mu$m et 2000 $\mu$m, préférentiellement compris entre 1100 $\mu$m et 1500 $\mu$m et est encore plus préférentiellement sensiblement égal à 1360 $\mu$m ;

- chaque actionneur est choisi dans le groupe constitué d'un actionneur piézoélectrique, d'un actionneur thermique, d'un actionneur magnétique et/ou d'un actionneur électrostatique ;

- l'équipage mobile dudit actionneur est agencé pour un déplacement en translation de l'aimant de course comprise entre 0 $\mu$m et 200 $\mu$m selon une direction parallèle à la direction principale d'aimantation ;

- la partie mobile dudit actionneur est agencée pour un déplacement en translation de course comprise entre 0 $\mu$m et 400 $\mu$m selon une direction perpendiculaire à la direction principale d'aimantation ;

L'invention concerne aussi un dispositif tel que défini ci-dessus, complété par un outil de commande numérique capable de stocker les paramètres de conversion pour passer des mesures de champ magnétique par les capteurs aux données de position de l'aimant et/ou de l'équipage mobile. C'est ce que l'on appelle aussi un dispositif mécatronique.

D'autres avantages et caractéristiques de l'invention apparaîtront à la lecture de la description détaillée ci-après et sur les dessins annexés sur lesquels :

- la figure 1 représente de manière schématique une vue en perspective d'un dispositif microtechnique selon un mode de réalisation de l'invention,

- la figure 2 est une vue en perspective de la partie du dispositif microtechnique où intervient l'invention,

- la figure 2A est la même vue que la Figure 2, mais sans montrer le support S, pour une meilleure visibilité,

- la figure 3 est une autre vue semblable à la figure 2A, montrant des lignes de champ magnétique,

- la figure 4 est une autre vue en perspective, montrant des points de gradient maximum du champ magnétique,

- la figure 5 est une autre vue semblable à la figure 3, montrant des notations vectorielles du champ magnétique,

- la figure 6 est une autre vue semblable à la figure 3, montrant des notations de grandeurs de position dans l'espace,

- la figure 7 est un graphe tridimensionnel qui montre l'évolution d'un champ magnétique sur deux directions,

- la figure 8 montre l'allure générale de la variation du champ magnétique sur un capteur en direction y, à z constant,

- la figure 8A est un graphe qui compare des mesures expérimentales réalisées avec un dispositif de l'invention aux faibles valeurs de y à une évolution linéaire,

- La figure 9 est un graphe tridimensionnel représentant les variations d'un gradient de champ magnétique dBz/dy sur deux directions,

- La figure 10 est un graphe établi avec des abscisses dans la direction y, et des ordonnées dans la direction z,

- La figure 11 est un graphe bidimensionnel de la variation du champ magnétique sur un capteur,

- La figure 12 est un graphe bidimensionnel de la variation du champ magnétique sur un autre capteur,

- la figure 13 montre une résolution spatiale en fonction de la distance capteur-aimant.

Les dessins et la description ci-après contiennent, pour l'essentiel, des éléments de caractère certain. Les dessins représentent, pour partie au moins, des aspects difficiles à décrire autrement que par le dessin. Ils font partie intégrante de la description, et pourront donc non seulement servir à mieux faire comprendre la présente invention, mais aussi contribuer à sa définition, le cas échéant.

Il en est de même pour les formules annexées à la présente description.

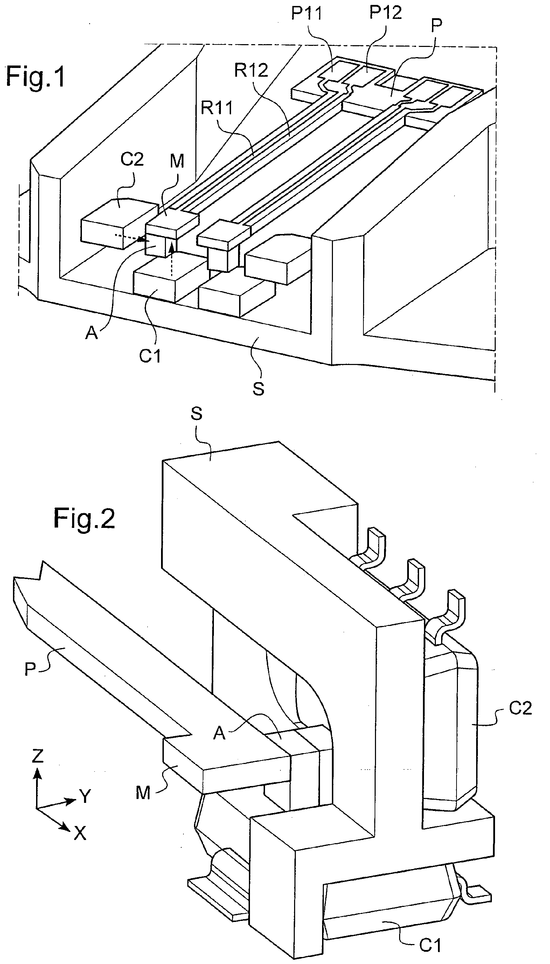

La figure 1 montre une vue en perspective d'un dispositif microtechnique selon un mode de réalisation de l'invention. Le dispositif comprend deux parties symétriques. Chacune comprend un actionneur P agencé pour déplacer un équipage mobile M par rapport à un support S. L'équipage mobile M porte solidairement un aimant permanent A. Dans ce mode de réalisation l'aimant A est fixé sur une face inférieure de l'équipage mobile M, qui est ici en position de repos.

Dans le mode de réalisation décrit l'actionneur P est de type piézoélectrique. En variante, des actionneurs sensibles aux effets électrostatiques ou thermiques notamment sont envisageables.

Ici, l'actionneur P comprend un élément piézoélectrique agissant sur une poutre déformable dans l'espace pour permettre un déplacement en translation de l'équipage mobile M par rapport à un support S. La poutre déformable est ici l'équipage mobile lui-même, qui est muni en face supérieure de deux rubans conducteurs R11 et R12 aboutissant à des plots de connexion P11 et P12. Il en est de même en face inférieure (Les rubans et plots du dessous ne sont pas visibles). La poutre M est un piezoélectrique bi-couche avec entre les couches une électrode de masse horizontale. L'une des couches procure la déformation de la poutre dans une direction, et l'autre dans l'autre.

Ainsi le déplacement de l'équipage mobile M et de l'aimant se fait selon deux degrés de liberté à partir d'une position de repos. Il s'agit en principe de deux degrés de liberté en translation dans deux directions perpendiculaires. Toutefois, un déplacement plus complexe à deux degrés de liberté reste envisageable.

Selon l'invention, l'aimant permanent A est choisi avec une distribution de champ magnétique qui admet un plan de symétrie principal, ainsi qu'une direction principale d'aimantation passant par un centre. Ici, l'aimant est cubique régulier. Il possède un volume d'environ 1 mm$^3$.

Pour chaque poutre M et chaque aimant, le dispositif microtechnique comprend des capteurs C1 et C2 sensibles au champ magnétique émis par l'aimant A selon des axes de travail respectifs représentés par des flèches discontinues. Les capteurs sont fixés sur le support S.

Dans le mode de réalisation décrit, il s'agit de capteurs à effet Hall, par exemple le modèle HAL401 de la société MICRONAS GmbH, Freiburg, Allemagne. Bien évidemment, d'autres capteurs analogues peuvent être prévus. Les capteurs sont agencés sur la structure de support pour répondre à une sensibilité d'environ 800 à 1200 G/mm (Gauss par millimètre).

Dans le dispositif microtechnique de la figure 1, l'actionneur P, l'équipage mobile M, l'aimant A et les capteurs C1 et C2 se trouvent dédoublés. Ainsi, les différents éléments et tout particulièrement les équipages mobiles peuvent coopérer ensemble pour former une pince piézoélectrique destinée à des opérations de micromanipulation notamment, par exemple comme décrit dans FR 2845026. A cet effet, on prévoira un outil de commande numérique capable de stocker des paramètres de conversion pour passer des mesures de champ magnétique par les capteurs aux données de position de l'aimant et/ou de l'équipage mobile.

Dans la suite, on visera un mode de réalisation expérimental à un seul équipage mobile, qui ne fait que porter l'aimant. Ce qui est décrit pourra s'appliquer aux deux équipages mobiles de la Figure 1.

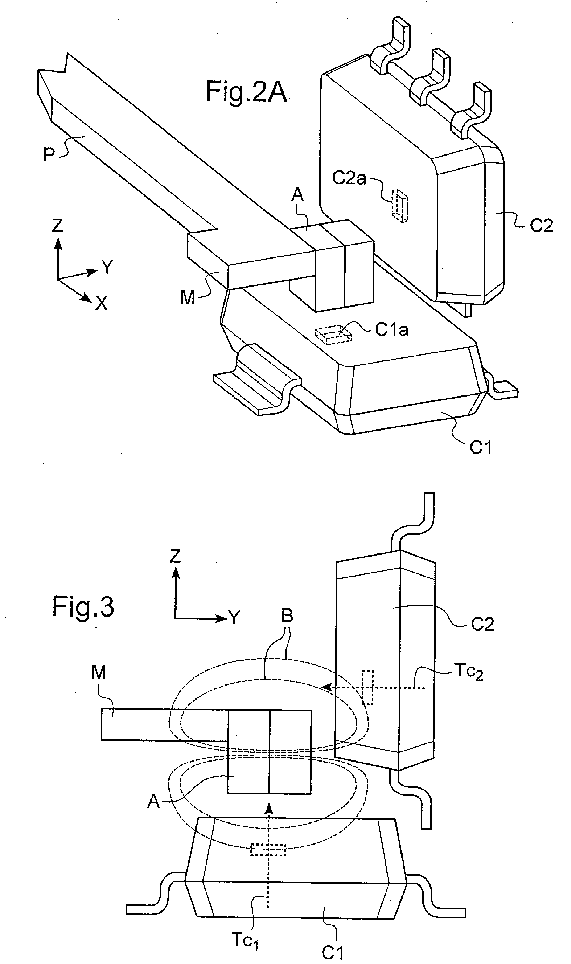

Les figures 2 et 2A font apparaître que l'aimant A est fixé latéralement à l'équipage mobile M de l'actionneur P. L'équipage mobile M est en position de repos et est agencé pour un déplacement selon deux degrés de liberté y et z à partir de cette position de repos.

Selon l'invention, l'équipage mobile M de l'actionneur P permet une course totale d'environ 400 $\mu$m sur l'axe z et une course totale d'environ 200 $\mu$m sur l'axe y. En d'autres termes la course relative haut/bas (sens +/-) est respectivement d'environ 200 $\mu$m sur l'axe z à partir de la position de repos; et la course relative droite/gauche (sens +/-) est respectivement d'environ 100 $\mu$m sur l'axe y à partir de la position de repos.

Les capteurs C1 et C2 de la figure 2 sont fixé sur le support S. Chaque capteur est positionné de manière spécifique. Le positionnement spécifique est réalisé en fonction des lignes de champs magnétique. Les capteurs C1 et C2 ont des zones sensibles respectives C1a et C2a. Le positionnement du capteur se définit comme le positionnement du centre de sa zone sensible par rapport au centre de l'aimant (ou du champ magnétique).

Le positionnement spécifique peut varier dans certaines limites. Cela est principalement du à la nature même des champs magnétiques, de leurs propriétés physiques et particulièrement de leur symétrie. À cet effet, l'invention vise un aimant permanent avec une distribution de champ magnétique qui admet un plan de symétrie principal. Le champ magnétique admet également une direction principale d'aimantation passant par un centre. La liberté de variation permet d'adapter le dispositif de l'invention en fonction de la taille des capteurs souvent munis de boîtiers plus ou moins encombrants.

La figure 3 montre de manière schématique une vue de face d'une variante de dispositif microtechnique de l'invention.

L'équipage mobile M est déplaçable en translation selon les axes y et z dans le référentiel de déplacement.

L'aimant permanent A est agencé pour une distribution de champ magnétique admettant un plan de symétrie principal. S'agissant d'un aimant cubique, qui possède deux plans de symétrie, on prend l'un de ceux-ci, défini par deux axes y et z, comme plan principal. Les lignes de champ du champ magnétique B sont tridimensionnelles, mais on va considérer surtout celles qui s'étendent dans ce plan de symétrie principal.

Les capteurs C1 et C2 sont placés en fonction de ces lignes de champ et agissent chacun selon des axes de travail respectifs représentés par des flèches discontinues ; axe de travail $T_{C1}$ pour le capteur C1 et axe de travail $T_{C2}$ pour le capteur C2. L'axe de travail $T_{C1}$ du capteur C1 est dirigé selon l'axe z et L'axe de travail $T_{C2}$ du capteur C2 est dirigé selon l'axe y. Précisément, chaque capteur mesure une composante (valeur scalaire) du champ magnétique selon son axe de travail respectif.

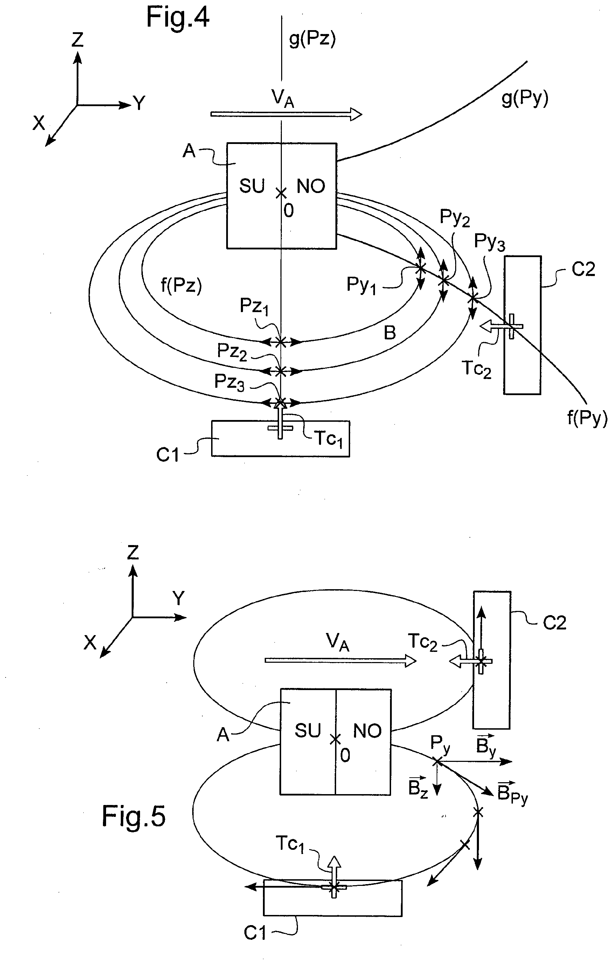

La figure 4 montre un schéma général d'un champ magnétique B d'un aimant permanent et de ses lignes de champ. La figure 4 montre également la disposition des capteurs C1 et C2 dans ce champ B. Plus particulièrement la figure 4 décrit l'emplacement spécifique des capteurs C1 et C2 selon un mode de réalisation de l'invention.

La figure 5 précise l'emplacement des capteurs C1 et C2 selon un autre mode de réalisation.

Il faut rappeler que le champ magnétique B est tridimensionnel (figures 4 et 5 : axes x, y, et z), mais que l'emplacement des capteurs C1 et C2 est choisi dans un plan commun.

L'aimant permanent A est choisi avec une distribution de champ magnétique B qui admet un plan de symétrie principal, ainsi qu'une direction principale d'aimantation $V_A$. On peut définir aussi l'axe d'aimantation qui est la parallèle à $V_A$ passant par le centre O, et par les pôles sud SU et nord NO de l'aimant permanent A. Le centre O est le centre physique de la source du champ magnétique B. Il est à l'intersection des 2 plans de symétrie du champ magnétique généré par l'aimant A et du plan d'interface entre les pôles Nord et Sud de l'aimant A. En principe, c'est également le centre de gravité de l'aimant permanent A.

La différence entre l'emplacement des capteurs C2 des modes de réalisation représentés respectivement sur la figure 4 et la figure 5 est liée à la symétrie du champ magnétique émis par l'aimant permanent A, dans le plan de symétrie « secondaire », perpendiculaire au plan de symétrie principal déjà cité. Toutefois, chaque emplacement de C2 répond sensiblement aux conditions spécifiques décrites ci-dessous.

Les capteurs C1 et C2 sont positionnés en fonction des lignes de champ. Plus précisément, le capteur C1 est placé sensiblement dans ledit plan de symétrie principal. L'axe de travail z de ce premier capteur C1 est sensiblement perpendiculaire à la direction principale d'aimantation $V_A$ et passe sensiblement par le centre O, dans la position de repos de l'aimant.

On considérera maintenant une « distance de travail » entre l'aimant et un capteur. Il s'agit de la distance entre le centre de gravité O de l'aimant (ou centre du champ magnétique) et le centre de la zone sensible du capteur.

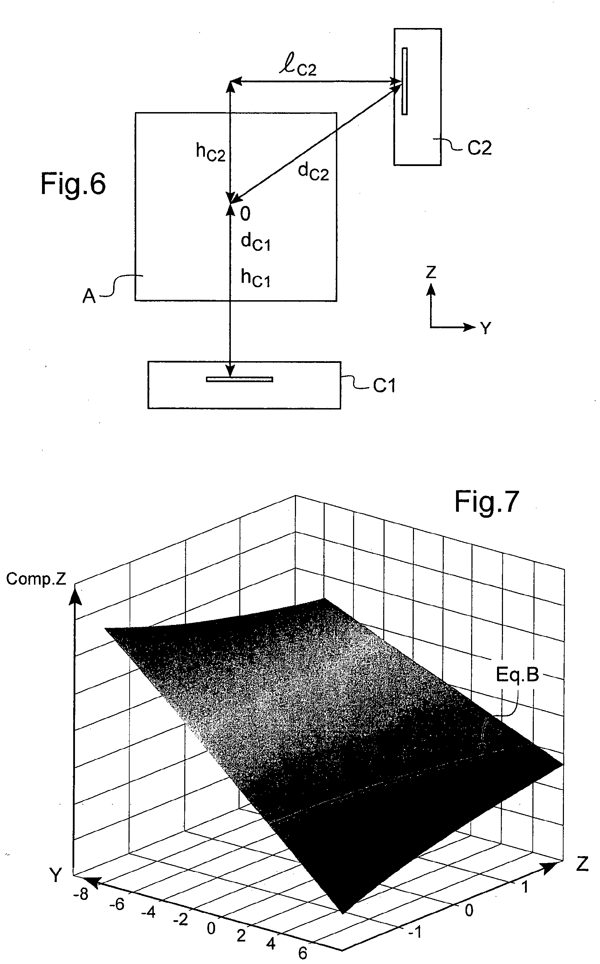

La figure 6 illustre des notations qui vont être utilisées ci-après :

$d_{C1}$    distance entre le capteur C1 et le centre O de l'aimant permanent A

$h_{C1}$    distance en direction z entre le capteur C1 et le centre O de l'aimant.

$d_{C2}$    distance entre le capteur C2 et le centre O de l'aimant

$h_{C2}$    distance en direction z entre le capteur C2 et le centre O de l'aimant

$l_{C2}$      distance en direction y entre le capteur C2 et le centre O de l'aimant.

Plus généralement, le premier capteur (C1) est placé sensiblement dans ledit plan de symétrie principal, à une première distance de travail $d_{C1}$ de l'aimant. L'axe de travail (z) de ce premier capteur (C1) est sensiblement perpendiculaire à la direction principale d'aimantation ($V_A$), et passe sensiblement par le centre (O), dans la position de repos de l'aimant. On a donc en principe :

$$d_{C1} = h_{C1}$$

En pratique, le premier capteur C1 est positionné sur la surface d'une sphère centrée sensiblement sur le centre O. Le rayon de cette sphère peut être compris entre 500 $\mu$m et 2000 $\mu$m, et préférentiellement compris entre 1000 $\mu$m et 1200 $\mu$m. De préférence le rayon de la sphère est encore sensiblement égal à 1100 $\mu$m, soit $d_{C1}$ = 1100 $\mu$m. La condition essentielle à respecter est un positionnement au voisinage d'un point d'extremum choisi parmi l'ensemble des points d'extremum $P_{z1}$, $P_{z2}$, $P_{z3}$ etc. et de ne par heurter physiquement l'aimant lors du déplacement de ce dernier ensemble avec l'équipage mobile.

Ainsi, on observe que le capteur C1 est positionné au voisinage d'un point d'extremum $P_z$. Pour le définir, on considère la composante $B_z$ du champ magnétique qui est détectée par le capteur C1. On considère la composante $dB_z/dy$ du gradient de $B_z$, sur la direction y sensiblement parallèle à la direction principale d'aimantation $V_A$. Le point d'extremum $P_z$ est défini comme le point où $dB_z/dy$ est maximale (ou minimale, en valeurs négatives).

En effet, pour la mesure d'une variation de position de l'aimant A, il faut mesurer une variation du champ magnétique $\vec{B}$, tel que défini par la formule (I) de l'annexe I.

Le positionnement du capteur est sensiblement choisi en fonction en fonction de la variation spatiale du champ magnétique $\vec{B}$. En effet, ce qui est recherché est une variation spatiale importante du champ magnétique. Cette variation spatiale est la divergence $\vec{\nabla}.\vec{B}$ du champ définie par la formule (II) de l'annexe I.

Le capteur C1 ne mesure qu'une composante du champ magnétique $\vec{B}$. Cette composante est une valeur scalaire, à savoir $B_z$ pour le capteur C1. La variation de cette composante est alors représentée par le gradient défini par la formule (III) de l'annexe I.

Autrement dit, il existe une relation directe entre la résolution du capteur de position et la composante dBz/dy du gradient calculé à la position de C1.

Sur la figure 4, il apparaît que chaque gradient du champ magnétique est dans un système bidimensionnel (au moins) dans le plan de symétrie du champ magnétique et/ou de l'aimant permanent A. Ainsi, les gradients du champ magnétique définissent au moins deux courbes respectives $f(P_2)$ et $f(P_y)$ - ou encore $g(P_z)$ et $g(P_y)$. Chaque courbe est décrite par ses points et chaque point est un gradient dBz/dy maximum ou un gradient dBy/dz maximum. La symétrie du champ magnétique a pour conséquence que $f(P_z)$ = $-g(P_z)$ et $f(P_y)$ = $-g(P_y)$.

Dans le cas du capteur C1, la détermination de l'extremum est simple. En effet, la courbe $f(P_z)$ (ou $g(P_z)$) est une droite qui passe par le centre de l'aimant, et est perpendiculaire à la direction principale d'aimantation $V_A$.

Tout comme le capteur C1, le capteur C2, ajouté selon la présente invention, est lui aussi positionné au voisinage d'un point d'extremum. La détermination de cet extremum est plus subtile.

Pour définir cet extremum, on considère la composante $B_y$ du champ magnétique qui est détectée par le capteur C2. On considère la composante $dB_y/dz$ du gradient de $B_y$, selon la direction z sensiblement perpendiculaire à la direction principale d'aimantation $V_A$. Le point d'extremum $P_y$ est défini comme un point où $dB_y/dz$ est maximale (ou minimale, en valeurs négatives).

Le capteur C2 mesure la composante $B_y$ (valeur scalaire) du champ magnétique $\vec{B}$. Sa variation est représentée par le gradient défini par la formule (IV) de l'annexe I.

Le capteur C2 est disposé à une seconde distance de travail de l'aimant A, notée $d_{C2}$. Plus généralement, le second capteur C2 est positionné sur la surface d'une sphère centrée sensiblement sur le centre O. Le rayon de cette sphère peut être compris entre 500 $\mu$m et 2000 $\mu$m, et préférentiellement compris entre de 1100 $\mu$m 1500 $\mu$m. De préférence, le rayon de la sphère est sensiblement égal à 1360 $\mu$m, soit $d_{C2}$ = 1,36 mm.

La condition essentielle à respecter est un positionnement au voisinage d'un point d'extremum choisi parmi l'ensemble des points d'extremum $P_{y1}$, $P_{y2}$, $P_{y3}$ etc. et de ne par heurter physiquement l'aimant lors du déplacement de ce dernier ensemble avec l'équipage mobile.

En conséquence, le capteur de mesure d'un déplacement selon l'axe y, à savoir le capteur C1 est disposé de sorte que la variation de champ magnétique qu'il détecte soit maximum pour un déplacement de l'actionneur dans un sens selon l'axe y ; et, de même, le capteur de mesure d'un déplacement selon l'axe z, à savoir le capteur C2 est disposé de sorte que la variation de champ magnétique qu'il détecte soit maximum pour un déplacement de l'actionneur dans un sens selon l'axe z.

On s'intéressera maintenant à la courbe $f(P_y)$ (ou $g(P_y)$), dans le plan de symétrie du champ magnétique B (Figure 4).

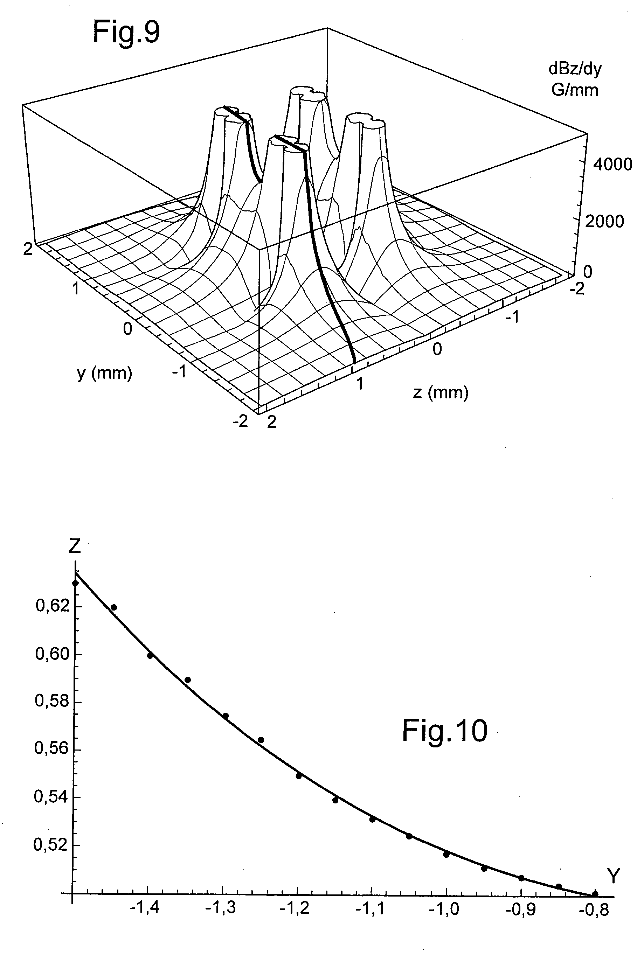

La figure 9 est un graphe tridimensionnel représentant les variations du gradient dBz/dy en fonction des distances y et z au centre de l'aimant, de coordonnées (0,0). Les axes y et z sont gradués en mm, et l'ordonnée, à droite, est en Gauss par millimètre.

La figure 10 est un graphe établi avec des abscisses dans la direction y, et des ordonnées dans la direction z. Elle illustre la localisation des points extremum pour le capteur C2. Chaque point extremum est établi comme l'extremum pour une distance donnée du centre de l'aimant, ayant les coordonnées (0,0), qui sont situées hors le cadre du graphique. Le graphe de la figure 10 correspond à la courbe en trait épais qui descend vers l'avant sur la figure 9. La courbe est d'allure parabolique, et peut s'ajuster sur un polynôme de degré 2 ou 3.

En résumé, dans un mode de réalisation particulier préférentiel de l'invention :

a. La distance $d_{C1}$ entre le capteur C1 et le centre O de l'aimant permanent A (ou centre du champ magnétique) est de 1100 $\mu$m. Le capteur C1 est positionné sur le support en dessous de l'aimant A (centré coaxialement) avec $h_{C1}$ = 1100 $\mu$m en direction z. Pour C1, on a $dB_z/dy$= 1000 Gauss/mm.

b. La distance $d_{C2}$ entre le capteur C2 et le centre O de l'aimant permanent A (ou centre du champ magnétique) est de 1360 $\mu$m. Le capteur C2 est positionné diagonalement par rapport à l'aimant A avec $h_{C2}$ = 800 $\mu$m en direction z et $l_{C2}$ = 1100 $\mu$m en direction y. Pour C2, on a $dB_y/dz$= 900 Gauss/mm.

Le dispositif microtechnique selon l'invention renvoie donc, pour chaque équipage mobile, deux mesures de champ magnétique, fournies respectivement par le capteur C1 et le capteur C2. Les mesures sont supposées ici être faites sous forme de tension, fonction du champ magnétique. La mesure est bruitée. Le capteur HAL401 a une résolution comprise entre 4,2 et 5,5 mV/G (données constructeur). Les tensions de sorties sont comprises entre 0 et +4,5V. Il est assorti d'une électronique de conditionnement, pour filtrer les bruits de mesure et amplifier le signal de -10V à +10V.

Les mouvements de l'équipage mobile M imposent à l'aimant A des déplacements dans le plan yz, avec une faible composante dans l'axe x, compte-tenu des faibles rotations nécessaires pour déplacer l'équipage mobile M avec la déformation de l'actionneur.

Le capteur C1 détecte les variations de la composante $B_z$ du champ magnétique, dans le but d'obtenir les déplacements de l'aimant selon l'axe y. De son côté, le capteur C2 détecte les variations de la composante $B_y$ du champ magnétique, dans le but d'obtenir les déplacements de l'aimant selon l'axe z.

Mais lorsque l'on veut convertir les champs magnétiques détectés par les capteurs C1 et C2 en déplacements, il y a un couplage, car un déplacement effectué purement selon l'axe y va provoquer non seulement une variation de la composante $B_z$ détectée par le capteur C1, mais aussi une variation de la composante $B_y$ détectée par le capteur C2.

La figure 7 est un graphe tridimensionnel, qui montre une évolution d'un champ magnétique sur deux directions y et z en abscisses, avec en ordonnées une grandeur Comp.Z, sur laquelle on reviendra. Elle fait apparaître le couplage entre les mesures effectuées. Les mesures sont dépendantes du positionnement de l'aimant permanent A.

On note maintenant Comp.Z la composante de champ magnétique mesurée sur le capteur C1. On admet que les capteurs de champ magnétique délivrent une tension proportionnelle au champ magnétique qu'ils détectent. Ainsi, la courbe équipotentielle Eq.B de la figure 7 est définie, dans le plan yz, par des points (en y) pour lesquels on obtient la même valeur de Comp.Z. En l'absence de couplage, cette courbe Eq.B serait une droite parallèle à l'axe z ; on aurait une valeur identique de Comp.Z quelle que soit la position de l'aimant A en direction z. Par conséquent, l'écart de la courbe Eq.B par rapport à une parallèle à l'axe z passant par la valeur mesurée au repos de l'aimant exprime le couplage entre les mesures effectuées par les capteurs C1 et C2.

Par exemple, si l'on considère une variation de la mesure de 100 % pour un déplacement sur toute une course sur l'axe y de l'aimant permanent A, un déplacement sur l'axe z de toute la course de l'aimant peut influer d'environ 20 % sur la mesure du champ magnétique. En conséquence, le capteur C1 mesurant un déplacement en direction y de l'aimant A est perturbé par le déplacement de celui-ci en direction z.

Ce couplage peut être corrigé en utilisant un algorithme de découplage approprié, utilisant par exemple des données de calibration, obtenues en présence de déplacements connus. L'algorithme utilisé reconstruit numériquement une image théorique des valeurs des composantes du champ magnétique mesurables par C1 et C2, appelées B1th et B2th. L'algorithme utilise les équations théoriques exprimant le champ magnétique généré par un aimant permanent, ainsi que les positions dans l'espace des capteurs par rapport à l'aimant permanent A au repos $h_{C1}$, $h_{C2}$, $l_{C2}$. Cette reconstruction numérique permet de créer une matrice regroupant les couples de position échantillonnés (y,z) et les couples de composantes générée (B1th, B2th) sur les positions atteignables de l'équipage mobile M. En fonctionnement du dispositif, l'algorithme exploite les deux mesures de C1 et C2, appelées B1mes et B2mes dont il recherche une correspondance dans la matrice, et trouve finalement le couple (y,z) idéal pour la mesure effectuée.

On s'intéresse maintenant à la variation du champ magnétique Bz détecté par le capteur C1 en fonction des déplacements de l'aimant dans la direction y.

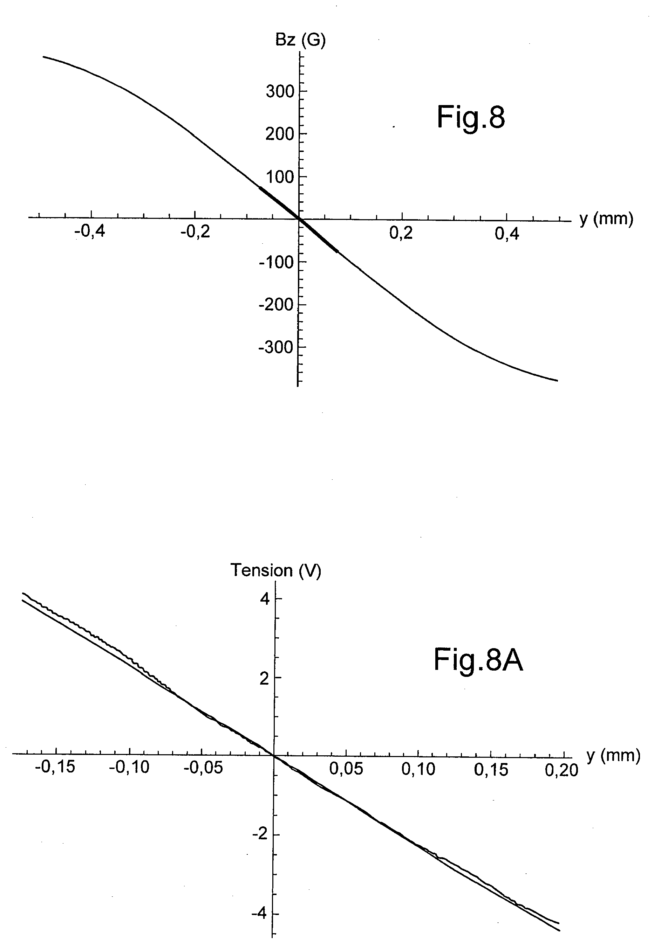

La figure 8 montre l'allure des variations du champ magnétique sur le capteur C1 en direction y selon l'invention, à z constant. La courbe présente une partie sensiblement linéaire aux faibles valeurs de y (partie marquée en gras sur la figure 8).

On a recherché l'écart de linéarité sur une course dans la direction y de l'équipage mobile M. Le graphe de la figure 8A compare des mesures expérimentales réalisées avec le dispositif décrit à une évolution linéaire (droite de régression), pour la variation du champ magnétique Bz détecté par le capteur C1 en fonction des déplacements de l'aimant dans la direction y, à z constant.

Aux faibles valeurs de y, cet écart de linéarité a été évalué à un maximum d'environ 0,22% de la valeur attendue (0,18 G pour 80 G). Il en découle que l'on peut considérer la courbe comme linéaire, et par conséquent la variation du champ magnétique Bz détecté par le capteur C1 en fonction des déplacements de l'aimant dans la direction y, comme linéaire elle aussi, aux faibles valeurs de y.

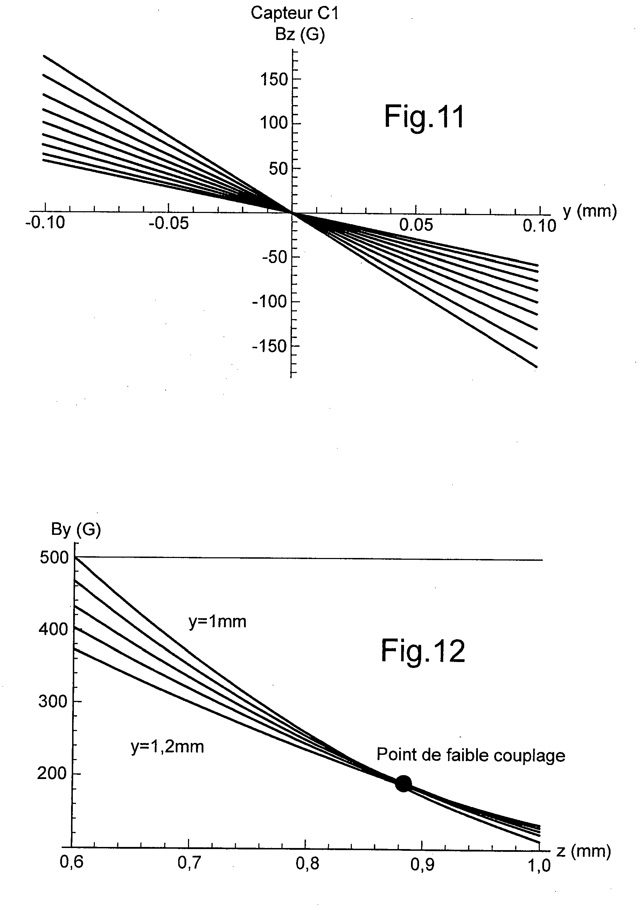

La figure 11 est un graphe bidimensionnel relatif au capteur C1, placé au point optimal (y=0, z=-1.1). Elle illustre la variation de la composante Bz du champ (en Gauss) en fonction de l'écart dans la direction y par rapport à la position de repos de l'aimant. Dans la famille de courbes, chaque courbe est prise avec un z constant, avec des valeurs de z de la série (-1.3, - 1.2, -1.1, -1, -0.9). La pente est la plus faible pour z=-1.3 mm, et croît ensuite avec z.

La figure 12 est un graphe bidimensionnel relatif au capteur C2, placé au point optimal (y=1.1, z=0.8). Elle illustre la variation de la composante By du champ (en Gauss) en fonction de l'écart dans la direction z par rapport à la position de repos de l'aimant. Dans la famille de courbes, chaque courbe est prise avec un y constant, avec des valeurs de y de la série (1, 1.05, 1.1, 1.15, 1.2). La pente est la plus faible pour y=1.2 mm, et croît ensuite quand y décroît.

La figure 12 fait apparaître une zone particulière de petite taille, où les courbes se croisent, au voisinage de z = 0.88. En ce point, la variation de la position en y n'a presque pas d'influence sur By. Cette zone est particulièrement intéressante, car on y obtient un découplage « naturel » de la mesure de By. On notera que la valeur $h_{C2}$ = 0.8 mm en est proche.

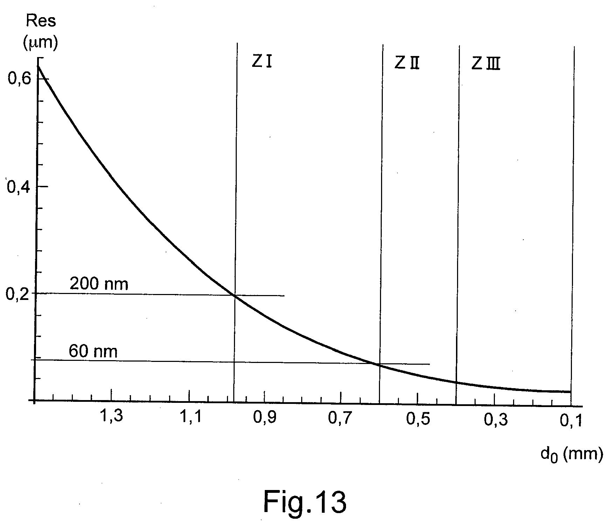

La figure 13 montre une résolution spatiale Res ($\mu$m) en fonction de la distance $d_O$ (mm) capteur-centre O du champ magnétique de l'invention. Trois zones se distinguent. Une première zone ZI dans laquelle les mesures effectuées sont exploitables, une deuxième zone ZII de sécurité (distance de sécurité capteur-aimant) et une troisième zone ZIII non exploitable.

La dégradation de résolution est exponentielle suivant la distance entre capteur C et le centre O du champ magnétique. En d'autres termes, plus le capteur est proche du centre O du champ magnétique plus le gradient mesuré est grand.

Mais, l'aimant A a une forme physique de quelques mm$^3$ (environ 1 mm$^3$ dans l'exemple de réalisation), par conséquent il s'ensuit une zone non exploitable ZIII pour laquelle les capteurs entreraient en contact physique avec l'aimant A. Il convient en outre de prévoir une distance de sécurité pour éviter le contact physique précité (zone ZII). En pratique cela dépendra de la course effective de l'aimant A sur l'équipage mobile M.

De plus, la résolution de chaque capteur dépend de plusieurs paramètres et notamment du bruit du capteur. Ce bruit est directement dépendant de la fréquence d'échantillonnage, à savoir la rapidité de mesure. En général on peut admettre que plus une mesure est longue, meilleure est sa résolution. Mais plus la mesure est longue, plus la dynamique est lente.

L'exemple de réalisation décrit utilise des capteurs HAL401 avec une fréquence d'échantillonnage de 100 Hz.

En plaçant le capteur au plus près de l'aimant, et en respectant la distance de sécurité du mode de réalisation, à savoir à une distance de 0,6 mm, on obtient une résolution de 60 nm. En se plaçant environ 0,4 mm plus loin de l'aimant, à savoir à une distance d'environ 1 mm, on obtient une résolution de 200 nm. On peut considérer ces distances comme définissant la zone exploitable ZI selon l'invention.

Un objectif du dispositif microtechnique est de mesurer la course de l'actionneur P, ou plus précisément de l'équipage mobile M. Il est donc important d'obtenir une mesure sensible de la position. Généralement, une résolution de 200 nm peut être considérée comme satisfaisante. Pour faire mieux, on visera une résolution d'environ 100 nm.

Il s'ensuit que plus les dimensions du système magnétique sont faibles plus le gradient local est important. Mais, typiquement, les boîtiers des capteurs (2,5 x 4,5 x 1,2 mm) sont assez grands par rapport à la zone sensible du capteur. Tout compris, l'ensemble des éléments aimant-capteurs du dispositif microtechnique va donc s'inscrite spatialement dans une sphère d'environ 10 mm de rayon.

Le dispositif microtechnique de l'invention est agencé pour mesurer des courses de l'équipage mobile inférieures ou égales à 1 mm.

L'actionneur peut être un actionneur piézoélectrique, un actionneur thermique et/ou d'un actionneur électrostatique, ou encore un actionneur magnétique. Dans ce dernier cas, on minimisera et/ou compensera les effets de l'actionneur magnétique sur les capteurs.

**Annexe I - Formules**

$$\vec{B} = B_x.\vec{x} + B_y.\vec{y} + B_z.\vec{z} \tag{I}$$

$$\vec{\nabla}.\vec{B} = \frac{\partial B_x}{\partial x} + \frac{\partial B_y}{\partial y} + \frac{\partial B_z}{\partial z} \tag{II}$$

$$\overrightarrow{Grad}\,Bz = \frac{\partial Bz}{\partial x}.\vec{x} + \frac{\partial Bz}{\partial y}.\vec{y} + \frac{\partial Bz}{\partial z}.\vec{z} \tag{III}$$

$$\overrightarrow{Grad}\,By = \frac{\partial By}{\partial x}.\vec{x} + \frac{\partial By}{\partial y}.\vec{y} + \frac{\partial By}{\partial z}.\vec{z} \tag{IV}$$

**Revendications**

1. Dispositif microtechnique, comprenant :

   - un actionneur, agencé pour déplacer un équipage mobile par rapport à un support, cet équipage mobile comportant un aimant permanent,

   un premier capteur magnétique (C1), agencé pour détecter un déplacement de l'aimant,
   dans lequel l'actionneur est agencé pour déplacer l'équipage mobile selon deux degrés de liberté à partir d'une position de repos,
   l'aimant permanent est choisi avec une distribution de champ magnétique qui admet un plan de symétrie principal, ainsi qu'une direction principale d'aimantation ($V_A$) qui passe un centre (O),
   le premier capteur (C1) est placé sensiblement dans ledit plan de symétrie principal, à une première distance de travail de l'aimant, tandis que l'axe de travail (z) de ce premier capteur (C1) est sensiblement perpendiculaire à la direction principale d'aimantation ($V_A$), et passe sensiblement par le centre (O), dans la position de repos de l'aimant,
   **caractérisé en ce qu'**
   il est prévu un second capteur magnétique (C2), placé sensiblement dans le plan de symétrie principal du champ de l'aimant, à une seconde distance de travail de l'aimant, tandis que l'axe de travail (y) de ce second capteur est sensiblement parallèle à la direction principale d'aimantation ($V_A$), dans la position de repos de l'aimant,
   le second capteur (C2) est positionné au voisinage d'un point d'extremum, pour ladite seconde distance de travail, ledit point d'extremum étant situé à un emplacement pour lequel la composante sur l'axe de travail (y) du gradient (dBy/dz) de la composante sur la direction principale d'aimantation ($V_A$) est maximale,
   les premier et second capteurs étant alors sensibles aux déplacements de l'équipage mobile perpendiculairement à leurs axes de travail respectifs.

2. Dispositif selon la revendication 1, dans lequel le premier capteur (C1) est positionné sur la surface d'une sphère centrée sensiblement sur ledit centre (O) et dont le rayon est compris entre 500 $\mu$m et 2000 $\mu$m, préférentiellement compris entre de 1000 $\mu$m et 1200 $\mu$m et est encore plus préférentiellement sensiblement égale à 1100 $\mu$m.

3. Dispositif selon l'une des revendications précédentes, dans lequel le second capteur (C2) est positionné sur la surface d'une sphère centrée sensiblement sur ledit centre (O) et dont le rayon est compris entre 500 $\mu$m et 2000 $\mu$m et est préférentiellement de préférentiellement compris entre de 1100 $\mu$m et 1500 $\mu$m et est encore plus préférentiellement sensiblement égale à 1360 $\mu$m.

4. Dispositif microtechnique selon l'une des revendications précédentes, dans lequel chaque actionneur est choisi dans le groupe constitué d'un actionneur piézoélectrique, d'un actionneur thermique, d'un actionneur magnétique et/ou d'un actionneur électrostatique.

5. Dispositif microtechnique selon l'une des revendications précédentes, dans lequel l'équipage mobile dudit actionneur est agencée pour un déplacement en translation de l'aimant de course comprise entre 0 $\mu$m et 200 $\mu$m selon une direction (y) parallèle à la direction principale d'aimantation.

6. Dispositif microtechnique selon l'une des revendications précédentes, dans lequel la partie mobile dudit actionneur est agencée pour un déplacement en translation de course comprise entre 0 $\mu$m et 400 $\mu$m selon une direction (z) perpendiculaire à la direction principale d'aimantation.

7. Dispositif selon l'une des revendications précédentes, **caractérisé en ce qu'**il comprend en outre un outil de commande numérique capable de stocker les paramètres de conversion pour passer des mesures de champ magnétique par les capteurs aux données de position de l'aimant et/ou de l'équipage mobile.

**Patentansprüche**

1. Mikrotechnische Vorrichtung, umfassend:

   - einen Aktuator, der so angeordnet ist, dass er eine bewegliche Ausrüstung bezüglich eines Trägers bewegt, wobei die bewegliche Ausrüstung einen Permanentmagneten umfasst,

   einen ersten Magnetsensor (C1), der so angeordnet ist, dass er eine Bewegung des Magneten erfasst, wobei der Aktuator so angeordnet ist, dass er die bewegliche Ausrüstung in zwei Freiheitsgraden aus einer Ruhestellung bewegt, der Permanentmagnet ausgewählt ist mit einer Magnetfeldverteilung, die eine Hauptsymmetrieebene zulässt, sowie einer Hauptmagnetisierungsrichtung ($V_A$), die einen Mittelpunkt (O) durchläuft, der erste Sensor (C1) im Wesentlichen in der Hauptsymmetrieebene in einem ersten Arbeitsabstand von dem Magneten platziert ist, während die Arbeitsachse (z) dieses ersten Sensors (C1) im Wesentlichen senkrecht zur Hauptmagnetisierungsrichtung ($V_A$) liegt und im Wesentlichen durch den Mittelpunkt (O) in der Magnetruhestellung verläuft,
   **dadurch gekennzeichnet, dass**
   ein zweiter Magnetsensor (C2) vorgesehen ist, der im Wesentlichen in der Hauptsymmetrieebene des Magnetfeldes in einem zweiten Arbeitsabstand vom Magneten platziert ist, während die Arbeitsachse (y) dieses zweiten Sensors im Wesentlichen parallel zur Hauptmagnetisierungsrichtung ($V_A$) in der Magnetruhestellung liegt, der zweite Sensor (C2) benachbart zu einem Endpunkt für den zweiten Arbeitsabstand positioniert ist, wobei sich der Endpunkt an einer Stelle befindet, für welche die Komponente auf der Arbeitsachse (y) des Gradienten (dBy/dz) der Komponente auf der Hauptmagnetisierungsrichtung ($V_A$) maximal ist, wobei der erste und der zweite Sensor dann auf die Bewegungen der mobilen Ausrüstung senkrecht zu ihren jeweiligen Arbeitsachsen reagieren.

2. Vorrichtung nach Anspruch 1, wobei der erste Sensor (C1) auf der Oberfläche einer Kugel positioniert ist, die im Wesentlichen auf dem Mittelpunkt (O) zentriert ist und einen Radius im Bereich zwischen 500 $\mu$m und 2 000 $\mu$m, vorzugsweise zwischen 1 000 $\mu$m und 1 200 $\mu$m und noch bevorzugter im Wesentlichen gleich 1 100 $\mu$m aufweist.

3. Vorrichtung nach einem der vorhergehenden Ansprüche, wobei der zweite Sensor (C2) auf der Oberfläche einer Kugel positioniert ist, die im Wesentlichen auf dem Mittelpunkt (O) zentriert ist und einen Radius im Bereich zwischen 500 $\mu$m und 2 000 $\mu$m, vorzugsweise zwischen 1 100 $\mu$m und 1 500 $\mu$m und noch bevorzugter im Wesentlichen gleich 1 360 $\mu$m aufweist.

4. Mikrotechnische Vorrichtung nach einem der vorhergehenden Ansprüche, wobei jeder Aktuator ausgewählt ist aus der Gruppe bestehend aus einem piezoelektrischen Aktuator, einem thermischen Aktuator, einem magnetischen Aktuator und/oder einem elektrostatischen Aktuator.

5. Mikrotechnische Vorrichtung nach einem der vorhergehenden Ansprüche, wobei die bewegliche Ausrüstung des Aktuators für eine translatorische Bewegung des Magneten im Bereich zwischen 0 $\mu$m und 200 $\mu$m in einer Richtung (y) parallel zur Hauptmagnetisierungsrichtung angeordnet ist.

6.  Mikrotechnische Vorrichtung nach einem der vorhergehenden Ansprüche, wobei der bewegliche Teil des Aktuators für eine translatorische Bewegung im Bereich zwischen 0 $\mu$m und 400 $\mu$m in einer Richtung (z) senkrecht zur Hauptmagnetisierungsrichtung angeordnet ist.

7.  Vorrichtung nach einem der vorhergehenden Ansprüche, **dadurch gekennzeichnet, dass** sie ferner ein digitales Steuergerät umfasst, das in der Lage ist, Umwandlungsparameter zur Übertragung von Magnetfeldmessungen durch Sensoren auf Positionsdaten des Magneten und/oder der mobilen Ausrüstung zu speichern.

**Claims**

1.  Microtechnology device, comprising:

    an actuator, designed to move a moving element relative to a support, this moving element comprising a permanent magnet,
    a first magnetic sensor (C1) designed to detect a movement of the magnet,
    the actuator is designed to move the movable element in two degrees of freedom from a resting position,
    the permanent magnet is chosen to have a magnetic field distribution that presents a main plane of symmetry and a main direction of magnetisation ($V_A$) passing through a centre (O),
    the first sensor (C1) is placed substantially in the said main plane of symmetry, at a first working distance from the magnet, whereas the working axis (z) of this first sensor (C1) is substantially perpendicular to the main direction of magnetisation ($V_A$), and passes substantially through the centre (O), in the resting position of the magnet,

    **characterised in that**

    a second magnetic sensor (C2) is provided, placed substantially in the main plane of symmetry of the magnetic field, at a second working distance from the magnet, whereas the working axis (y) of this second sensor is substantially parallel to the main direction of magnetisation ($V_A$), in the resting position of the magnet,
    the second sensor (C2) is positioned close to an extremum, for said second working distance, the said extremum being located at a position for which the component on the working axis (y) of the gradient (dBy/dz) of the component over the main direction of magnetisation ($V_A$) is at its maximum,
    the first and second sensors then being sensitive to the movements of the movable element perpendicularly to their respective working axes.

2.  Device according to claim 1, wherein the first sensor (C1) is positioned on the surface of a sphere centred substantially on said centre (O) and having a radius of between 500 $\mu$m and 2000 $\mu$m, preferably between 1000 $\mu$m and 1200 $\mu$m, and is still more preferably substantially equal to 1100 $\mu$m.

3.  Device according to one of the preceding claims, wherein the second sensor (C2) is positioned on the surface of a sphere centred substantially on said centre (O) and having a radius of between 500 $\mu$m and 2000 $\mu$m, and preferably between 1100 $\mu$m and 1500 $\mu$m, and still more preferably substantially equal to 1360 $\mu$m.

4.  Microtechnology device according to one of the preceding claims, wherein each actuator is selected from the group comprising a piezoelectric actuator, a thermal actuator, a magnetic actuator and/or an electrostatic actuator.

5.  Microtechnology device according to one of the preceding claims, wherein the movable equipment of said actuator is arranged for translational movement of the magnet over a distance of between 0 $\mu$m and 200 $\mu$m in a direction (y) parallel to the main direction of magnetisation.

6.  Microtechnology device according to one of the preceding claims, wherein the movable part of the actuator is arranged for translational movement over a distance of between 0 $\mu$m and 400 $\mu$m in a direction (z) perpendicular to the main direction of magnetisation.

7.  Device according to one of the preceding claims, **characterised in that** it further comprises a digital control tool capable of storing the conversion parameters in order to convert magnetic field measurements made by the sensors into positional data for the magnet and/or movable equipment.

Fig.1

Fig.2

Fig.2A

Fig.3

Fig.4

Fig.5

Fig.6

Fig.7

Fig.8

Fig.8A

Fig.9

Fig.10

Capteur C1
Bz (G)

Fig.11

By (G)

Fig.12

y=1mm

y=1,2mm

Point de faible couplage

z (mm)

Fig.13

**EP 2 529 187 B1**